# EUROPÄISCHE PATENTANMELDUNG

(11) **EP 4 506 824 A1**
(43) Veröffentlichungstag der Anmeldung: **12.02.2025**
(21) Anmeldenummer: 23189912.1
(22) Anmeldetag: 07.08.2023
(51) Int. Cl.: G06F 11/36, G06F 11/26, G06F 30/20

(54) **COMPUTERIMPLEMENTIERTES VERFAHREN ZUR ÜBERPRÜFUNG DER AUSFÜHRUNG WENIGSTENS EINER STEUERGERÄTEFUNKTION AUF EINEM SIMULATOR UND ENTSPRECHENDER SIMULATOR**

(71) Anmelder: dSPACE GmbH, 33102 Paderborn (DE)
(72) Erfinder: SCHEDLER, Stephan, 33102 Paderborn (DE); Poljak, Stjepan, 10000 Zagreb (HR)

(57) **Zusammenfassung**

Beschrieben und dargestellt ist ein computerimplementiertes Verfahren (1) zur Überprüfung der Ausführung wenigstens einer Steuergerätefunktion (f1, f2, f3) eines Steuergerätes mittels wenigstens einer Recheneinheit (5) einer Simulationsumgebung (4) auf einem Simulator (2), wobei die Steuergerätefunktion (f1, f2, f3) unter Nullzeitannahme einer diskret fortschreitenden Simulationszeit (tsim) zwischen aufeinanderfolgenden Simulationsschritten in einer ereignisorientierten diskreten Simulation auf dem Simulator (2) ausgeführt wird.

Die Ursache von Blockadesituationen in der Simulation lässt sich effizient dadurch ermitteln, dass ein auf dem Simulator (2) betriebener Beobachtungsdienst (6) den Fortschritt der diskreten Simulationszeit (tsim) mit dem Fortschritt einer Simulator-Echtzeit (treal) vergleicht und bei Überschreiten des Fortschritts der Simulator-Echtzeit (treal) über den Fortschritt der diskreten Simulationszeit (tsim) über einen vorgegebenen Grenzwert (td) zumindest mittelbar eine Mehrzahl von Stacktraces (7) der wenigstens einen Recheneinheit (5) erstellt (8) und dass in einem Auswerteschritt (9) durch Auswertung der Stacktraces (7) zumindest diejenige häufigste Steuergerätefunktion (fmax) ermittelt wird, die die wenigstens eine Recheneinheit (5) am häufigsten ausgeführt hat zum Zeitpunkt der Erstellung (8) des jeweiligen Stacktrace (7) und dass die ermittelte häufigste Steuergerätefunktion (fmax) angezeigt und/oder weiterverarbeitet wird.

## Beschreibung

Die Erfindung betrifft ein computerimplementiertes Verfahren zur Überprüfung der Ausführung wenigstens einer Steuergerätefunktion eines Steuergerätes mittels wenigstens einer Recheneinheit einer Simulationsumgebung auf einem Simulator, wobei die Steuergerätefunktion unter Nullzeitannahme einer diskret fortschreitenden Simulationszeit zwischen aufeinanderfolgenden Simulationsschritten in einer ereignisorientierten diskreten Simulation auf dem Simulator ausgeführt wird. Außerdem betrifft die Erfindung auch einen entsprechenden Simulator mit wenigstens einer Recheneinheit, wobei im Betriebszustand des Simulators auf der Recheneinheit eine Simulationsumgebung mit einer Recheneinheit betrieben wird, wobei mit der Recheneinheit der Simulationsumgebung wenigstens eine Steuergerätefunktionen eines Steuergerätes unter Nullzeitannahme einer diskret fortschreitenden Simulationszeit zwischen aufeinanderfolgenden Simulationsschritten in einer ereignisorientierten diskreten Simulation auf dem Simulator ausgeführt wird.

Computerimplementierte Verfahren der vorgenannten Art und entsprechende Simulatoren dienen dem Test von Steuergerätefunktionen, also von Funktionen, die softwaremäßig auf elektronischen Steuergeräten implementiert werden sollen. Dies betrifft speziell frühe Entwicklungsstadien, in denen das elektronische Steuergerät (electronic control uni, ECU), für das die Steuergerätefunktion gedacht ist, hardwaremäßig noch gar nicht vorhanden ist. Vielmehr wird auf einem Simulator, häufig ein leistungsfähiger PC, eine Simulationsumgebung betrieben, die ein mögliches Steuergerät, einschließlich der Recheneinheit des Steuergeräts, (virtuell) nachbildet, sodass es möglich ist, die Steuergerätefunktion im Rahmen der Simulationsumgebung auszuführen und damit zu testen. Eine entsprechende Simulationsumgebung und auch entsprechende Simulatoren werden von der Anmelderin unter der Bezeichnung "VEOS" entwickelt. Häufig wird mit der Simulationsumgebung das Steuergerät, für das die Steuergerätefunktion gedacht ist, softwaremäßig nachgebildet, also emuliert. Die Emulation umfasst auch die Recheneinheit des Steuergeräts, sodass auch die Simulationsumgebung über eine entsprechende Recheneinheit verfügt und damit auch hardwarenahe Funktionalitäten zugreifbar sind und getestet werden können.

Bei den Simulationen handelt es sich um ereignisorientierte diskrete Simulationen (diskrete event simulation) im Gegensatz zu zeitgetriebenen Simulationen. Bei beiden Arten der Simulation wird die Simulation in diskreten Zeitschritten ausgeführt, wie es für Abtastsysteme und die numerische, zeitdiskrete Berechnung von Modellen üblich ist: Die Simulationszeit schreitet im Laufe der Simulation also in diskreten Zeitschritten fort. Bei zeitgetriebenen Simulationen gibt es aber eine physikalische Echtzeit, die auf dem Simulator bekannt ist, die beispielsweise als Simulator-Echtzeit einer internen physikalischen Uhr bereitgestellt wird, wobei das Fortschreiten der Simulator-Echtzeit automatisch zum Fortschreiten der Simulationszeit und damit zum automatischen Übergang von einem Simulationsschritt zu dem nächsten Simulationsschritt führt. Bei den hier betrachteten ereignisgetriebenen Simulationen gibt es keine Abhängigkeit der Simulationszeit von einer physikalischen Simulator-Echtzeit. Die unterschiedlichen zu berechnenden Gegenstände, wie beispielsweise die auszuführende Steuergerätefunktion, werden in jedem Simulationsschritt ausgeführt, wobei es auf die Dauer der Ausführung in dem jeweiligen Simulationsschritt nicht ankommt. Es wird von einem Simulationsschritt zum nächsten gesprungen, wenn alle Berechnungen des einen Simulationsschritts abgeschlossen sind, also das Ereignis der Fertigstellung der Berechnung aller Steuergerätefunktion eingetreten ist. Da die tatsächliche Ausführungszeit nicht von Interesse ist und so praktisch nur die diskreten Simulationszeitpunkte der jeweiligen Simulationsschritte existieren, wird bei der hier betrachteten ereignisorientierten diskreten Simulation von der sogenannten Nullzeitannahme gesprochen.

Es kommt vor, dass beim Test von Steuergerätefunktionen mit der Simulationsumgebung eines Simulators Blockaden in der Simulation auftreten, die Simulation also nicht weiterläuft und damit praktisch in einem Simulationsschritt festhängt, also die diskret fortschreitende Simulationszeit nicht voranschreitet.

Aufgabe der vorliegenden Erfindung ist es, das geschilderte Verfahren und den diesbezüglichen Simulator so weiterzubilden, dass die Ursachen derartiger Blockaden erkannt werden können.

Die Aufgabe ist bei dem eingangsbeschriebenen Verfahren und dem eingangs beschriebenen Simulator zunächst und im Wesentlichen dadurch gelöst, dass ein auf dem Simulator betriebener Beobachtungsdienst den Fortschritt der diskreten Simulationszeit mit dem Fortschritt einer Simulator-Echtzeit vergleicht. Die Simulator-Echtzeit ist so zu verstehen, wie sie zuvor beschrieben worden ist. Es handelt sich um eine auf dem Simulator verfügbare Zeitinformation einer physikalischen Zeit, die also zwingend voranschreitet und nicht von der Simulation abhängig ist. Es kommt nicht darauf an, woher diese Zeitinformation stammt, ob sie auf einer physikalischen Recheneinheit des Simulators generiert wird, ob sie von einer übergeordneten Uhr stammt, oder ob sie regelmäßig von einer externen Uhr an den Simulator übertragen wird, wichtig ist, dass es sich um eine von der Simulation unabhängige Zeitinformation handelt.

Bei Überschreiten des Fortschritts der Simulator-Echtzeit über den Fortschritt der diskreten Simulationszeit über einen vorgegebenen Grenzwert werden eine Mehrzahl von Stacktraces der wenigstens einen Recheneinheit erstellt. Bei der Recheneinheit handelt es sich um die im Rahmen der Simulationsumgebung nachgebildete Recheneinheit des Steuergeräts, für das die Steuergerätefunktion gedacht ist. Unter einem Stacktrace wird hier allgemein eine Abbildung, also eine Momentaufnahme der internen Betriebssysteminformationen über die auf der Recheneinheit ausgeführten bzw. aufgerufenen Steuergerätefunktionen verstanden. Auch hier ist die im Rahmen der Simulationsumgebung nachgebildete Recheneinheit des Steuergeräts gemeint. Anhand des Stacktrace ist also ersichtlich, welche Steuergerätefunktionen im aktuellen Zeitpunkt der Erstellung des jeweiligen Stacktraces aufgerufen sind. Der Umstand, dass die Erstellung der Stacktraces an die Vorbedingung eines Vergleichsergebnisses zwischen der Simulationszeit und der Simulator-Echtzeit geknüpft wird, hat erhebliche Effizienzvorteile gegenüber einem denkbaren Verfahren, bei dem ständig Stacktraces erstellt werden, unabhängig davon, ob es einen Hinweis auf einen Blockadezustand gibt.

In einem Auswerteschritt wird durch Auswertung der Stacktraces zumindest diejenige häufigste Steuergerätefunktion ermittelt, die die wenigstens eine Recheneinheit, also die Recheneinheit der Simulationsumgebung, am häufigsten ausgeführt hat zum Zeitpunkt der Erstellung des jeweiligen Stacktrace. Die ermittelte häufigste Steuergerätefunktion wird angezeigt und/oder weiterverarbeitet oder jedenfalls als Information abgespeichert.

Erfindungsgemäß ist erkannt worden, dass Blockadezustände bei ereignisorientierten diskreten Simulationen häufig zu einer "aktiven" Blockade führen, bei der eine Steuergerätefunktion fortwährend aktiv ist und nicht beendet wird.

Dieses Verständnis weicht ab von dem üblichen Verständnis einer Blockadesituation, bei der oft verschiedene Steuergerätefunktionen aufeinander warten, die Steuergerätefunktionen aber nicht selbst aktiv sind. Bei einer solchen Blockade ist die Recheneinheit nicht ausgelastet. Den Umstand der aktiven Blockade bei ereignisorientierten diskreten Simulation führt dazu, dass mithilfe der Erfassung von Stacktraces erkannt werden kann, welche Steuergerätefunktion aktiv blockiert ist.

In einer bevorzugten Ausgestaltung des Verfahrens wird der Beobachtungsdienst als Bestandteil der Simulationsumgebung ausgeführt, besonders bevorzugt im Rahmen einer Emulation des Steuergeräts, die von der Simulationsumgebung ausgeführt wird.

Bei einer Weiterbildung des Verfahrens ist vorgesehen, dass der Beobachtungsdienst entweder mindestens einen nicht maskierbaren Interrupt der Recheneinheit der Simulationsumgebung auslöst, der die Erstellung der Mehrzahl von Stacktraces der wenigstens einen Recheneinheit der Simulationsumgebung auslöst, oder dass der Beobachtungsdienst einen nicht maskierbaren Interrupt der Recheneinheit der Simulationsumgebung mehrfach auslöst, der jeweils die Erstellung eines Stacktrace der wenigstens einen Recheneinheit der Simulationsumgebung auslöst und so auch eine Mehrzahl von Stacktraces erstellt wird. Bei einer alternativen Weiterbildung des Verfahrens ist vorgesehen, dass der Beobachtungsdienst das Überschreiten des Fortschritts der Simulator-Echtzeit über den Fortschritt der diskreten Simulationszeit über einen vorgegebenen Grenzwert signalisiert und ein Benutzer auf die Signalisierung hin mindestens einen nicht maskierbaren Interrupt auslöst, der dann wiederum die Erfassung der Mehrzahl von Stacktraces der wenigstens einen Recheneinheit der Simulationsumgebung auslöst.

Eine bevorzugte Ausgestaltung des Verfahrens zeichnet sich dadurch aus, dass der Beobachtungsdienst die Mehrzahl an Stacktraces bedingungslos nacheinander aufnimmt bzw. die Erstellung einer solchen Mehrzahl an Stacktraces auslöst, insbesondere in festen Intervallen der Simulator-Echtzeit, vorzugsweise werden mehr als zehn, besonders bevorzugt einhundert oder mehr Stacktraces aufgenommen, was die Aussagekraft der statistischen Auswertung erhöht.

Eine weitere bevorzugte Ausgestaltung des Verfahrens ist dadurch gekennzeichnet, dass die Mehrzahl von Stacktraces für alle Recheneinheiten der Simulationsumgebung erstellt werden und dass vorzugsweise in dem Auswerteschritt die Stacktraces aller Recheneinheiten zusammen ausgewertet werden und die am häufigsten ausgeführte Steuergerätefunktion ermittelt wird und vorzugsweise angezeigt wird. Durch diese Maßnahme werden sicher alle ausgeführten Steuergerätefunktionen erfasst, insbesondere wenn die Verteilung der Steuergerätefunktionen auf die verschiedenen Recheneinheiten des Steuergeräts und damit auf die Recheneinheiten der Simulationsumgebung, die die verschiedenen Recheneinheiten des Steuergeräts ja nachbilden, nicht vorhersehbar ist. Dies kann beispielsweise der Fall sein, weil die Simulationsumgebung Steuergerätefunktionen bzw. davon abgeleiteten ausführbaren Code nach eigenen Regeln und in Abhängigkeit von veränderlichen Zuständen der Simulationsumgebung und/oder der Recheneinheiten der Simulationsumgebung auf die Recheneinheiten verteilt.

Bei einem vorteilhaften Ausführungsbeispiel des Verfahrens werden im Auswerteschritt die n häufigsten Steuergerätefunktionen ermittelt, die die wenigstens eine Recheneinheit am häufigsten ausgeführt hat zum Zeitpunkt der Erstellung des jeweiligen Stacktrace, insbesondere werden die ermittelten n häufigsten Steuergerätefunktionen angezeigt. Durch diese Maßnahme können auch mehrere an einer Blockade beteiligte Steuergerätefunktionen erkannt werden. Ferner lassen sich auch auffällige Häufigkeiten in der Ausführung bestimmter Steuergerätefunktionen detektieren.

Für den Fall, dass mehrere Steuergerätefunktionen auf mehreren Recheneinheiten der Simulationsumgebung ausgeführt werden, ist bei einer bevorzugten Ausgestaltung des Verfahrens vorgesehen, dass im Auswerteschritt für die mehreren Recheneinheiten zumindest diejenige häufigste Steuergerätefunktion ermittelt wird, die die jeweilige Recheneinheit am häufigsten ausgeführt hat zum Zeitpunkt der Erstellung des jeweiligen Stacktrace und dass die ermittelte häufigste Steuergerätefunktion für die jeweilige Recheneinheit angezeigt wird, insbesondere wobei für alle Recheneinheiten zumindest die häufigste Steuergerätefunktion ermittelt wird. Dies ermöglicht das Erkennen mehrerer blockierender Steuergerätefunktionen auf verschiedenen Recheneinheiten.

Die zuvor hergeleitete Aufgabe wird ebenfalls mit dem eingangs beschriebenen Simulator gelöst, der im Betrieb das zuvor beschriebene Verfahren durchführt.

Im Einzelnen gibt es eine Vielzahl von Möglichkeiten, das erfindungsgemäße Verfahren zur Überprüfung der Ausführung wenigstens einer Steuergerätefunktion eines Steuergerätes mittels wenigstens einer Recheneinheit einer Simulationsumgebung auf einem Simulator auszugestalten und weiterzubilden.

Dazu wird verwiesen, einerseits auf die dem unabhängigen Patentanspruch 1 nachgeordneten Patentansprüche, andererseits auf die folgende Beschreibung von Ausführungsbeispielen in Verbindung mit der Zeichnung. In der Zeichnung zeigen
- Fig. 1: schematisch ein computerimplementiertes Verfahren zur Überprüfung der Ausführung wenigstens einer Steuergerätfunktion eines Steuergeräts mittels wenigstens einer Recheneinheit einer Simulationsumgebung auf einem Simulator und der entsprechende Simulator, wobei die Recheneinheit der Simulationsumgebung im Rahmen einer Emulation simuliert wird,
- Fig. 2: schematisch das Verfahren zur Überprüfung der Ausführung einer Steuergerätefunktion und der dazu verwendete Simulator, wobei die Recheneinheit der Simulationsumgebung hardwaremäßig realisiert ist durch ein FPGA,
- Fig. 3: schematisch das Verfahren zur Überprüfung der Ausführung einer Steuergerätefunktion sowie der dazu verwendete Simulator, wobei als Recheneinheit der Simulationsumgebung die Recheneinheit des Simulators verwendet wird und
- Fig. 4: schematisch das Verfahren zur Überprüfung der Ausführung einer Steuergerätefunktion bei mehreren Recheneinheiten der Simulationsumgebung.

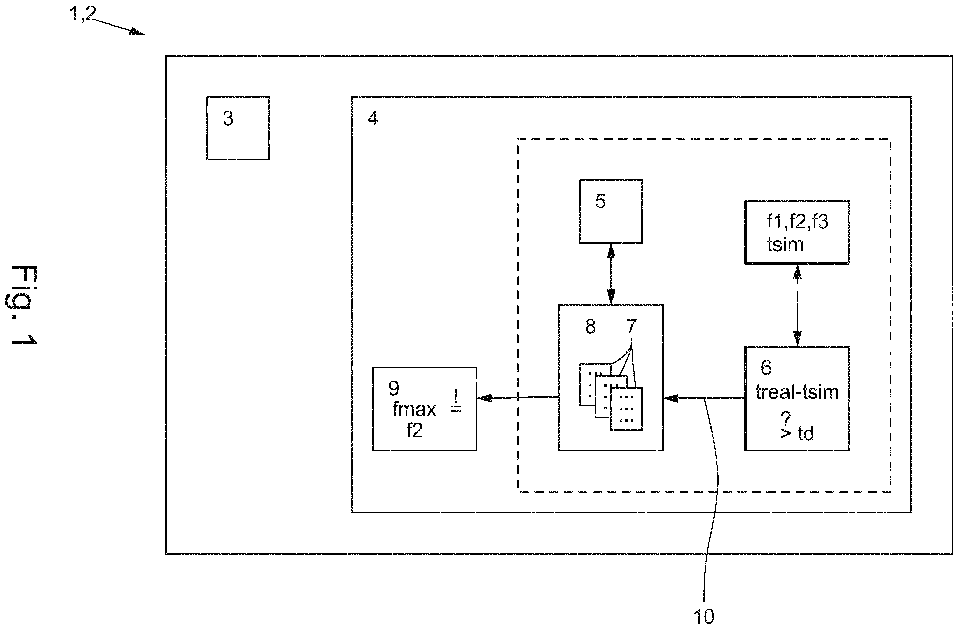

Die Fig. 1 bis 4 zeigen schematisch jeweils ein computerimplementiertes Verfahren 1 zur Überprüfung der Ausführung wenigstens einer Steuergerätefunktion f1, f2, f3 eines Steuergerätes. Das Steuergerät ist nicht dargestellt, da es zur Durchführung des Verfahrens 1 nicht benötigt wird. Der typische Anwendungsfall, in dem das hier dargestellte Verfahren 1 verwendet wird, betrifft gerade die Situation, dass die Software für ein Steuergerät bereits entwickelt wird, obwohl das Steuergerät hardwaremäßig noch nicht existiert, gleichwohl soll die Software-Funktionalität aber schon überprüft werden. Deshalb wird das Steuergerät mit einem Simulator 2 nachgebildet, es wird daher auch von dem Test von Steuergerätesoftware auf einem virtuellen Steuergerät gesprochen.

Die hier dargestellten Simulatoren 2 weisen eine Recheneinheit 3 auf. Vorliegend handelt es sich bei dem Simulator 2 um einen PC, der mit dem Betriebssystem Linux betrieben wird, selbstverständlich sind andere Konfigurationen ohne Weiteres denkbar. Auf dem Simulator 2 - und damit also auf der Recheneinheit 3 des Simulators 2 - wird eine Simulationsumgebung 4 betrieben. Die Simulationsumgebung 4 dient der Simulation des Steuergerätes, für das die Steuergerätefunktionen f1, f2, f3 erstellt worden sind. Insoweit weist die Simulationsumgebung 4 ihrerseits eine Recheneinheit 5 auf, wobei diese Recheneinheit 5 die Recheneinheit des Steuergeräts nachbildet, für das die Steuergerätefunktionen f1, f2, f3 gedacht sind.

Die Darstellungen in den Figuren sind auch insoweit schematisch, als dass die Recheneinheit 3 des Simulators 2 und die Recheneinheit 5 der Simulationsumgebung 4 der Vollständigkeit halber dargestellt sind und die auf diesen Recheneinheiten 3, 5 betriebenen Funktionalitäten, also die Simulationsumgebung 4 im Falle der Recheneinheit 3 des Simulators 2 genauso wie die Steuergerätefunktionen f1, f2, f3 im Falle der Recheneinheit 5 der Simulationsumgebung 4 nebeneinander dargestellt sind und nicht ineinander geschachtelt. Die Zuordnungen von Funktionalitäten zu den Orten, wo sie ausgeführt werden, erfolgt bedarfsweise durch die Beschreibung der Figuren.

Die in den Figuren dargestellten Verfahren 1 und Simulatoren 2 haben jedenfalls gemeinsam, dass die Steuergerätefunktionen f1, f2, f3 unter Nullzeitannahme einer diskret fortschreitenden Simulationszeit tsim zwischen aufeinander folgenden Simulationsschritten in einer ereignisorientierten diskreten Simulation auf dem Simulator 2 ausgeführt werden. Wie bereits im allgemeinen Beschreibungsteil ausgeführt worden ist, zeichnen sich derartige Simulationen dadurch aus, dass in jedem diskreten Simulationsschritt alle erforderlichen Berechnungen durchgeführt worden, ungeachtet der tatsächlichen Zeitdauer für diese Berechnungen. Es wird zum nächsten Simulationsschritt gesprungen, wenn alle Berechnungen im vorigen Simulationsschritt abgeschlossen worden sind. Da in der ereignisgetriebenen Simulation die zeitliche Dauer zwischen den einzelnen diskreten Simulationsschritten unbeachtlich ist, wird von der erwähnten Nullzeitannahme gesprochen.

Bei den Simulationen kann die Situation auftreten, dass - aus welchem Grund auch immer - die Berechnung einer Steuergerätefunktion f1, f2, f3 nicht abgeschlossen wird ("aktive Blockade"), sodass die ereignisorientierte diskrete Simulation nicht fortschreiten kann und die diskrete Simulationszeit tsim auf einem Wert verharrt.

Mit dem in den Figuren dargestellten Verfahren 1 ist es möglich, die Ursachen derartiger Blockaden zu erkennen und gegebenenfalls darauf zu reagieren. Dies wird in allen dargestellten Ausführungsbeispielen dadurch realisiert, dass ein auf dem Simulator 2 betriebener Beobachtungsdienst 6 den Fortschritt der diskreten Simulationszeit tsim mit dem Fortschritt einer Simulator-Echtzeit treal vergleicht. Bei der Simulator-Echtzeit treal handelt es sich um eine auf dem Simulator 2 verfügbare Zeit, die ungehindert fortschreitet, die insbesondere vollkommen unabhängig ist von dem Fortschritt der Simulation auf dem Simulator 2. Bei Überschreiten des Fortschritts der Simulator-Echtzeit treal über den Fortschritt der diskreten Simulationszeit tsim über einen vorgegebenen Grenzwert td wird zumindest mittelbar eine Mehrzahl von Stacktraces 7 der wenigstens einen Recheneinheit 5 erstellt. Die Stacktraces 7 sind Momentaufnahmen der internen Betriebssysteminformationen über die auf der Recheneinheit 5 der Simulationsumgebung 4 ausgeführten Steuergerätefunktionen f1, f2, f3. In einem Auswerteschritt 8 wird durch Auswertung der Stacktraces 7 zumindest diejenige häufigste Steuergerätefunktion fmax ermittelt, die die Recheneinheit 5 der Simulationsumgebung 4 am häufigsten ausgeführt hat zum Zeitpunkt der Erstellung der jeweiligen Stacktraces 7. Die ermittelte häufigste Steuergerätefunktion fmax wird angezeigt und/oder auch weiter verarbeitet. Eine mögliche Weiterverarbeitung besteht darin, dass die Ausführung der Simulation im Rahmen der Simulationsumgebung 4 gestoppt wird.

Bei dem Ausführungsbeispiel gemäß Fig. 1 wird das Steuergerät, für das die Steuergerätefunktionen f1, f2, f3 gedacht sind, mit der Simulationsumgebung 4 emuliert, angedeutet durch die gestrichelte Linie, die die Recheneinheit 5, die Steuergerätefunktionen f1, f2, f3, den Beobachtungsdienst 6 und die Erstellung der Stacktraces 7 umgibt. Diese Funktionalitäten werden im Rahmen der Steuergeräteemulation ausgeführt. Tatsächlich könnte der Beobachtungsdienst 6 auch außerhalb der Steuergeräteemulation durchgeführt werden, genau wie die Veranlassung zur Erstellung 8 der mehreren Stacktraces 7. Der Beobachtungsdienst 6 könnte auch außerhalb der Simulationsumgebung 4 ausgeführt werden, es muss nur sichergestellt werden, dass die Simulationszeit tsim über eine geeignete Schnittstelle dem Beobachtungsdienst 6 verfügbar gemacht wird. Es sind hier auch weitere Abwandlungen denkbar, worauf es im Einzelnen jedoch nicht ankommt.

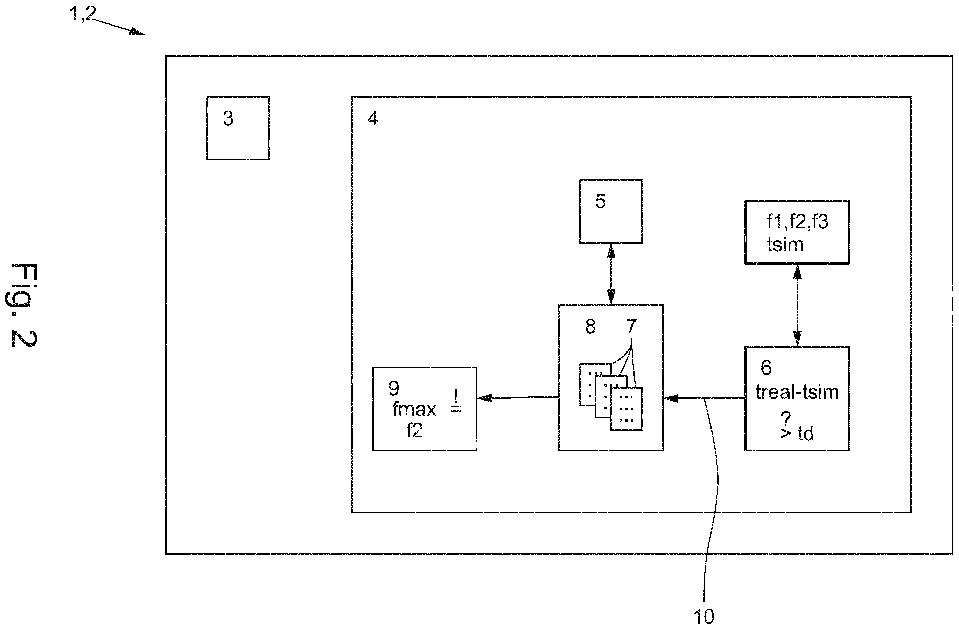

Bei dem Ausführungsbeispiel gemäß Fig. 2 werden die Steuergerätefunktionen f1, f2, f3 tatsächlich nicht auf einem emulierten Steuergerät mit einer simulierten Recheneinheit ausgeführt, sondern auf einer Recheneinheit 5 der Simulationsumgebung 4, die als FPGA (Field Programmable Gate Array) realisiert ist. Entscheidend ist nur, dass die Steuergerätefunktion f1, f2, f3 unter Nullzeitannahme der diskret fortschreitenden Simulationszeit tsim in einer ereignisorientierten diskreten Simulation ausgeführt werden.

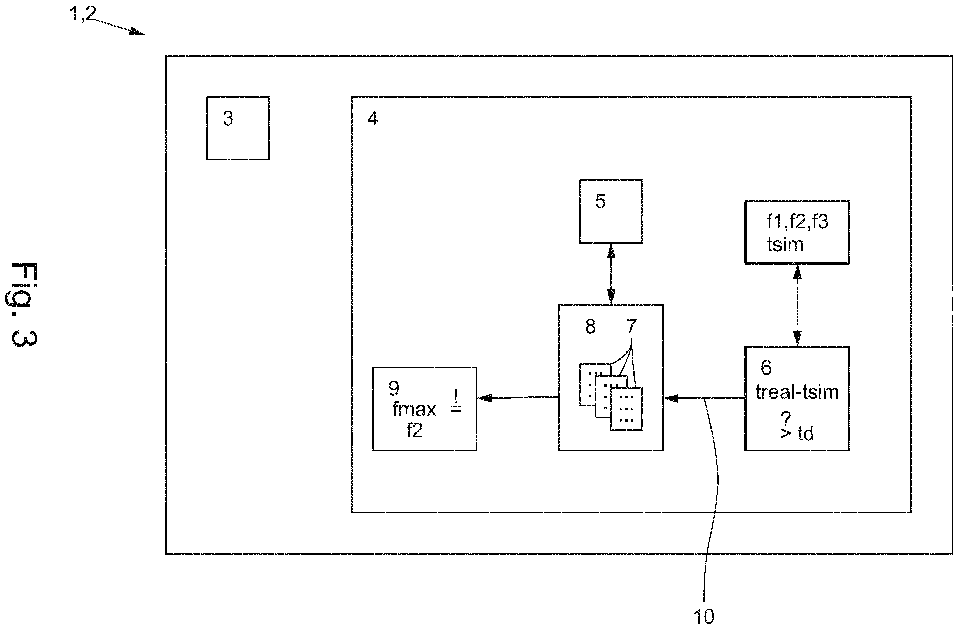

Der Simulator in Fig. 3 zeichnet sich dadurch aus, dass die Steuergerätefunktionen f1, f2, f3 auf der Recheneinheit 5 der Simulationsumgebung ausgeführt werden, wobei als Recheneinheit 5 der Simulationsumgebung 4 unmittelbar die Recheneinheit 3 des Simulators 2 verwendet wird. Es handelt sich hier also um eine Hypervisor-Lösung, mit der die Hardware des Simulators 2, insbesondere die Recheneinheit 3 des Simulators 2, zugreifbar ist, sodass die Steuergerätefunktion f1, f2, f3 auf der Recheneinheit 3 des Simulators 2 ausgeführt werden können. Die Recheneinheit 3 des Simulators 2 und die Recheneinheit 5 der Simulationsumgebung 4 sind hier praktisch identisch.

Bei den dargestellten Verfahren 1 löst der Beobachtungsdienst 6 bei Überschreiten des Fortschritts der Simulator-Echtzeit treal über den Fortschritt der diskreten Simulationszeit tsim über einen vorgegebenen Grenzwert td einen nicht maskierbaren Interrupt 10 der Recheneinheit 5 der Simulationsumgebung 4 aus. Gemäß dem üblichen Verständnis ist ein nicht maskierbarer Interrupt nicht deaktivierbar, es kann also nicht verhindert werden, dass die mit ihm verbundene Interrupt Service Routine bei Auslösen des Interrupts auch ausgeführt wird. An den nicht maskierbaren Interrupt 10 ist die Erstellung 8 der Mehrzahl von Stacktraces 7 der Recheneinheit 5 der Simulationsumgebung 4 gebunden, sodass in Folge der Auslösung des nicht maskierbaren Interrupts 10 auch die Mehrzahl an Stacktraces 7 erfasst wird. Der in den Figuren dargestellte Pfeil zur Symbolisierung der Wirkung der Auslösung des nicht maskierbaren Interrupts 10 ist eine verkürzte Darstellung der vollständigen Wirkreihenfolge: Ausführlich dargestellt wirkt der Beobachtungsdienst 6 auf die Interruptfunktionalität der Recheneinheit 5 ein, die wiederum die Erstellung 8 der Mehrzahl an Stacktraces 7 auslöst. Im Fall des Ausführungsbeispiels von Fig. 1 handelt es sich bei dem Interrupt 10 um einen nicht maskierbaren Interrupt 10 der emulierten Recheneinheit 5 des Steuergeräts, im Fall von Fig. 3 handelt es sich bei dem Interrupt 10 um einen nicht maskierbaren Interrupt 10 der Recheneinheit 3 des Simulators 2.

In den dargestellten Ausführungsbeispielen wird die Mehrzahl an Stacktraces 7 bedingungslos nacheinander aufgenommen 8, vorliegend in festen Intervallen der Simulator-Echtzeit treal. Es hat sich als geeignete Grundlage für die Auswertung der Stacktraces 7 hinsichtlich der Häufigkeit der Ausführung der Steuergerätefunktionen f1, f2, f3 als vorteilhaft herausgestellt, wenn zumindest einige 10 Stacktraces erstellt 8 werden, in den dargestellten Ausführungsbeispielen werden 100 Stacktraces erstellt 8.

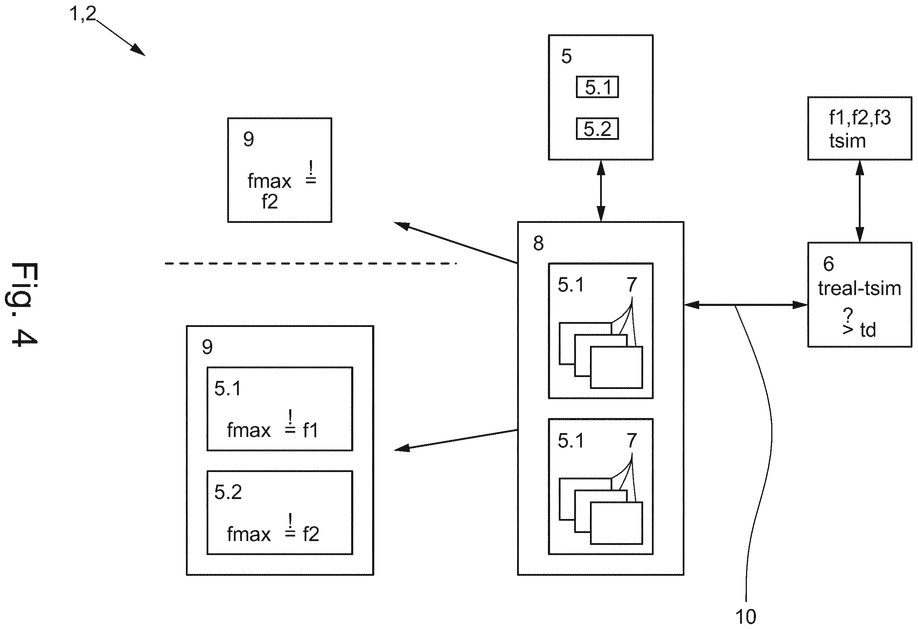

Fig. 4 zeigt Ausgestaltungen des Verfahrens 1, wenn die Simulationsumgebung 4 mehrere Recheneinheiten 5.1 und 5.2 aufweist. Die Mehrzahl von Stacktraces 7 werden für alle Recheneinheiten 5.1, 5.2 der Simulationsumgebung 2 erstellt. Im Ausführungsbeispiel oben werden in dem Auswerteschritt 9 die Stacktraces 7 aller Recheneinheiten 5.1, 5.2 zusammen ausgewertet und die am häufigsten ausgeführte Steuergerätefunktion fmax,ges wird ermittelt und angezeigt (fmax,ges =! f2).

Bei dem in Fig. 4 links unten dargestellten Ausführungsbeispiel werden im Auswerteschritt für mehrere Recheneinheiten 5.1, 5.2 zumindest diejenige häufigste Steuergerätefunktion fmax ermittelt, die die jeweilige Recheneinheit 5.1, 5.2 am häufigsten ausgeführt hat zum Zeitpunkt der Erstellung des jeweiligen Stacktrace 7. Ferner wird die ermittelte häufigste Steuergerätefunktion fmax für die jeweilige Recheneinheit 5.1, 5.2 angezeigt.

### Bezugszeichenliste

- 1: computerimplementiertes Verfahren
- 2: Simulator
- 3: Recheneinheit des Simulators
- 4: Simulationsumgebung
- 5: Recheneinheit der Simulationsumgebung
- 6: Beobachtungsdienst
- 7: Stacktrace
- 8: Erstellen von Stacktraces
- 9: Auswerteschritt
- 10: nicht maskierbarer Interrupt

- f1, f2, f3: Steuergerätefunktionen
- fmax: häufigst ausgeführte Steuergerätefunktion
- tsim: Simulationszeit
- treal: Simulator-Echtzeit
- td: Zeit-Grenzwert

## Patentansprüche

1. Computerimplementiertes Verfahren (1) zur Überprüfung der Ausführung wenigstens einer Steuergerätefunktion (f1, f2, f3) eines Steuergerätes mittels wenigstens einer Recheneinheit (5) einer Simulationsumgebung (4) auf einem Simulator (2), wobei die Steuergerätefunktion (f1, f2, f3) unter Nullzeitannahme einer diskret fortschreitenden Simulationszeit (tsim) zwischen aufeinanderfolgenden Simulationsschritten in einer ereignisorientierten diskreten Simulation auf dem Simulator (2) ausgeführt wird,
**dadurch gekennzeichnet,**
**dass** ein auf dem Simulator (2) betriebener Beobachtungsdienst (6) den Fortschritt der diskreten Simulationszeit (tsim) mit dem Fortschritt einer Simulator-Echtzeit (treal) vergleicht und bei Überschreiten des Fortschritts der Simulator-Echtzeit (treal) über den Fortschritt der diskreten Simulationszeit (tsim) über einen vorgegebenen Grenzwert (td) zumindest mittelbar eine Mehrzahl von Stacktraces (7) der wenigstens einen Recheneinheit (5) erstellt (8) und dass in einem Auswerteschritt (9) durch Auswertung der Stacktraces (7) zumindest diejenige häufigste Steuergerätefunktion (fmax) ermittelt wird, die die wenigstens eine Recheneinheit (5) am häufigsten ausgeführt hat zum Zeitpunkt der Erstellung (8) des jeweiligen Stacktrace (7) und dass die ermittelte häufigste Steuergerätefunktion (fmax) angezeigt und/oder weiterverarbeitet wird.

2. Verfahren (1) nach Anspruch 1, **dadurch gekennzeichnet, dass** der Beobachtungsdienst (6) als Bestandteil der Simulationsumgebung (4) ausgeführt wird.

3. Verfahren (1) nach Anspruch 1 oder 2, **dadurch gekennzeichnet, dass** der Beobachtungsdienst (6) entweder mindestens einen nicht maskierbaren Interrupt (10) der Recheneinheit (5) der Simulationsumgebung (4) auslöst, der die Erstellung (8) der Mehrzahl von Stacktraces (7) der wenigstens einen Recheneinheit (5) der Simulationsumgebung (4) auslöst, oder dass der Beobachtungsdienst (6) einen nicht maskierbaren Interrupt (10) der Recheneinheit (5) der Simulationsumgebung (4) mehrfach auslöst, der jeweils die Erstellung (8) eines Stacktrace (7) der wenigstens einen Recheneinheit (5) der Simulationsumgebung (4) auslöst, sodass so auch eine Mehrzahl von Stacktraces (7) erstellt (8) wird.

4. Verfahren (1) nach einem der Ansprüche 1 bis 3, **dadurch gekennzeichnet, dass** der Beobachtungsdienst (6) die Mehrzahl an Stacktraces (7) bedingungslos nacheinander aufnimmt, insbesondere in festen Intervallen der Simulator-Echtzeit (treal) aufnimmt.

5. Verfahren (1) nach einem der Ansprüche 1 bis 5, **dadurch gekennzeichnet, dass** die Mehrzahl von Stacktraces (7) für alle Recheneinheiten (5.1, 5.2) der Simulationsumgebung (5.1, 5.2) erstellt werden und dass vorzugsweise in dem Auswerteschritt (9) die Stacktraces (7) aller Recheneinheiten (5.1, 5.2) zusammen ausgewertet werden und die am häufigsten ausgeführte Steuergerätefunktion (fmax) ermittelt wird und vorzugsweise angezeigt wird.

6. Verfahren (1) nach einem der Ansprüche 1 bis 5, **dadurch gekennzeichnet, dass** im Auswerteschritt (9) die n häufigsten Steuergerätefunktionen (f1, f2, f3) ermittelt werden, die die wenigstens eine Recheneinheit (5) am häufigsten ausgeführt hat zum Zeitpunkt der Erstellung des jeweiligen Stacktrace (7), insbesondere wobei die ermittelten n häufigsten Steuergerätefunktionen (f1, f2, f3) angezeigt werden.

7. Verfahren (1) nach einem der Ansprüche 1 bis 6, **dadurch gekennzeichnet, dass** im Auswerteschritt (9) für mehrere Recheneinheiten (5.1, 5.2) zumindest diejenige häufigste Steuergerätefunktion (fmax) ermittelt wird, die die jeweilige Recheneinheit (5.1, 5.2) am häufigsten ausgeführt hat zum Zeitpunkt der Erstellung (8) des jeweiligen Stacktrace (7) und dass die ermittelte häufigste Steuergerätefunktion (fmax) für die jeweilige Recheneinheit (5.1, 5.2) angezeigt wird, insbesondere wobei für alle Recheneinheiten (5.1, 5.2) zumindest die häufigste Steuergerätefunktion (f1, f2, f3) ermittelt wird.

8. Simulator (2) mit wenigstens einer Recheneinheit (3), wobei im Betriebszustand des Simulators (2) auf der Recheneinheit (3) eine Simulationsumgebung (4) mit einer Recheneinheit (5) betrieben wird, wobei mit der Recheneinheit (5) der Simulationsumgebung (4) wenigstens eine Steuergerätefunktionen (f1, f2, f3) eines Steuergerätes unter Nullzeitannahme einer diskret fortschreitenden Simulationszeit (tsim) zwischen aufeinanderfolgenden Simulationsschritten in einer ereignisorientierten diskreten Simulation auf dem Simulator (2) ausgeführt wird,
**dadurch gekennzeichnet,**
**dass** der Simulator (2) so ausgestaltet und eingerichtet ist, dass der Simulator (2) im Betriebszustand das Verfahren (1) gemäß einem der Ansprüche 1 bis 7 ausführt.
